(19) Europäisches Patentamt
European Patent Office
Office européen des brevets

(11) **EP 1 233 894 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(21) Anmeldenummer: **00981232.2**

(22) Anmeldetag: **02.11.2000**

(51) Int Cl.:
*B60T 8/88* (2006.01)    *F16H 61/02* (2006.01)
*F16H 59/00* (2006.01)

(86) Internationale Anmeldenummer:
**PCT/EP2000/010796**

(87) Internationale Veröffentlichungsnummer:
**WO 2001/032487 (10.05.2001 Gazette 2001/19)**

(54) **VERFAHREN ZUM ABBREMSEN EINES FAHRZEUGS UND VORRICHTUNG ZUR DURCHFÜHRUNG DES VERFAHRENS**

AUTOMOTIVE BRAKING METHOD AND DEVICE FOR CARRYING OUT SAID METHOD

PROCEDE POUR LE RALENTISSEMENT D'UN VEHICULE AUTOMOBILE ET DISPOSITIF POUR L'EXECUTION DE CE PROCEDE

(84) Benannte Vertragsstaaten:
**DE ES FR GB IT**

(30) Priorität: **03.11.1999 DE 19952781**

(43) Veröffentlichungstag der Anmeldung:
**28.08.2002 Patentblatt 2002/35**

(73) Patentinhaber: **DaimlerChrysler AG**
**70567 Stuttgart (DE)**

(72) Erfinder:
• **FREITAG, Rainer**
**73277 Owen (DE)**
• **HUBER, Wilfried**
**75395 Ostelsheim (DE)**
• **MÜLLER, Armin**
**32369 Rahden (DE)**
• **TRÖSTER, Harry**
**71732 Tamm (DE)**

(56) Entgegenhaltungen:
**EP-A- 0 466 036**      **EP-A- 0 924 128**
**DE-A- 19 735 015**      **GB-A- 2 195 963**

EP 1 233 894 B1

**Beschreibung**

Die Erfindung betrifft ein Verfahren zum Abbremsen eines Fahrzeugs nach dem Oberbegriff des Patentanspruchs 1 bzw. eine Vorrichtung zur Durchführung des Verfahrens.

Neuere Fahrzeugbremsanlagen sind zur Auslösung des Bremsvorganges elektrisch ansteuerber und beispielsweise als elektrohydraulische Bremsanlagen realisiert, die eine Druckerzeugungseinheit (z.B. Motor-Pumpen-Einheit), einen Druckspeicher und elektrisch ansteuerbare Ventileinheiten umfassen, durch die an den Vorderrädern und Hinterrädern des Fahrzeugs jeweils angeordnete Radbremseinrichtungen betätigbar sind. Darüber hinaus sind elektromechanische Fahrzeugbremsanlagen bekannt, die ohne Hydraulikfluid auskommen (sogenannte "trockene Bremsanlage").

Aus der gattungsgemäßen DE 197 35 015 A1 ist es bekannt, dass mehrere sogenannte "x-by-wire-Syteme" miteinander in Verbindung stehen und bei Ausfall eines der x-by-wire-Systeme die noch funktionsfähigen x-by-wire-Systeme das Fahrzeug in einen sicheren Zustand überführen.

Des weiteren geht aus der GB 2 195 963 A eine Zusatzbremseinheit hervor, die im Antriebsstrang vorgesehen ist. Bei Defekt des Betriebsbremssystems kann der Fahrer die Zusatzbremseinheit manuell betätigen, um die Fahrzeuggeschwindigkeit zu reduzieren.

Um in einem Notfall, bei einer Betriebsstörung der Fahrzeugbremsanlage - beispielsweise bei Ausfall der hydraulischen Druckerzeugungseinheit, von Sensoren, von Ventilen oder anderen hydraulischen Komponenten - das Fahrzeug noch mit der gesetzlich vorgeschriebenen Mindestverzögerung zum Stillstand zu bringen, ist eine Rückfallebene erforderlich, die z.B. an den Rädern der Vorderachse eine direkte hydraulische Verbindung der Radbremseinrichtungen mit einem an sich bekannten Zweikreis-Hauptbremszylinder ermöglicht, so dass mittels der hydraulischen Verbindung ein Bremsdruck in den Radbremseinrichtungen erzeugbar ist.

Hierdurch wird ein Bremsweg im Rahmen der gesetzlichen Vorschriften ermöglicht.

Aufgabe der Erfindung ist es, ein Verfahren zum Abbremsen eines Fahrzeugs der eingangs beschriebenen Art so zu verbessern, dass insbesondere im Notfall bei einer Betriebsstörung der Fahrzeugbremsanlage, eine Verringerung des Bremsweges auf einfache Weise ermöglicht wird.

Diese Aufgabe wird bei einem Verfahren zum Abbremsen eines Fahrzeugs mit den Merkmalen des Patentanspruchs 1 und bei einer Vorrichtung zur Durchführung dieses Verfahrens mit den Merkmalen des Patentanspruches 10 gelöst.

Durch eine automatische, durch die Getriebesteuereinheit bewirkte Änderung der Getriebeübersetzung zur Erhöhung des an den angetriebenen Rädern wirkenden Schleppmoments ist eine zusätzliche Bremsung der Antriebsachse im wesentlichen ohne eine Vielzahl zusätzlicher Bauteile möglich. Hierdurch wird in Notsituationen bei einem Bremsvorgang mit reduzierter Bremswirkung der Fahrzeugbremsanlage, z.B. bei einem Ausfall der Druckerzeugungseinheit für den hydraulischen Bremsdruck oder bei einem Ausfall eines Bremskreises, eine erhebliche Verkürzung der Bremsvorgänge erreicht.

Die Erhöhung des Bremsmoments an den angetriebenen Rädern durch verbesserte Ausnutzung des vorhandenen Motorschleppmoments ist dabei auf die unterschiedlichste Art und Weise und bei den unterschiedlichsten Getriebearten möglich.

Bei einer vorteilhaften Ausführungsform für ein Fahrzeug mit automatischem Lastschaltgetriebe ist vorgesehen, dass die Übersetzung des automatischen Lastschaltgetriebes durch Herunterschalten in eine niedrigere Fahrstufe erhöht wird.

Bei einer anderen Ausführungsform für ein mit einem Handschaltgetriebe ausgerüstetes Fahrzeug wird die Übersetzung vorteilhafterweise durch Herunterschalten in einen niedrigeren Gang mittels Aktoren erhöht. Diese Ausführungsform eignet sich in besonderer Weise für teil- oder vollautomatisierte Handschaltgetriebe.

Bei einer weiteren Ausführungsform für ein mit einem stufenlosen Getriebe ausgerüstetes Fahrzeug ist vorgesehen, die Übersetzung des stufenlosen Getriebes kontinuierlich zu erhöhen.

Die Erfassung des Bremswunsches erfolgt vorzugsweise auf eine oder mehrere der folgenden Weisen: Erfassung der Stellung eines Bremspedal, durch einen Pedalsensor, durch wenigstens einen Bremsdrucksensor, durch Erfassung und Auswertung der Fahrzeugverzögerung. Der Bremswunsch kann grundsätzlich auf beliebige Art und Weise erkannt werden.

Weitere Merkmale und Vorteile der Erfindung sind Gegenstand der nachfolgenden Beschreibung sowie der zeichnerischen Darstellung eines Ausführungsbeispiels.

In der Zeichnung zeigen:

Fig. 1   eine schematisch dargestellte Vorrichtung zur Durchführung des erfindungsgemäßen Verfahrens mit elektrohydraulischer Bremsanlage und einem Getriebe und

Fig. 2   ein Flußdiagramm eines Ausführungsbeispiels des erfindungsgemäßen Verfahrens.

Ein Ausführungsbeispiel der Erfindung wird nachfolgend anhand eines Fahrzeugs mit einer elektrohydraulische Bremsanlage und mit einem Getriebe mit mehreren Gangstufen erläutert.

Es versteht sich jedoch, dass die Erfindung nicht auf Fahrzeuge mit elektrohydraulischen Bremsanlagen und mit Getrieben mit mehreren Gangstufen beschränkt ist.

Vielmehr kann es ebenso bei Fahrzeugen mit anderen Fahrzeugbremsanlagen (z.B. elektromechanischen Bremsanlagen) und bei Fahrzeugen mit beispielsweise stufenlosen Getrieben zum Einsatz kommen.

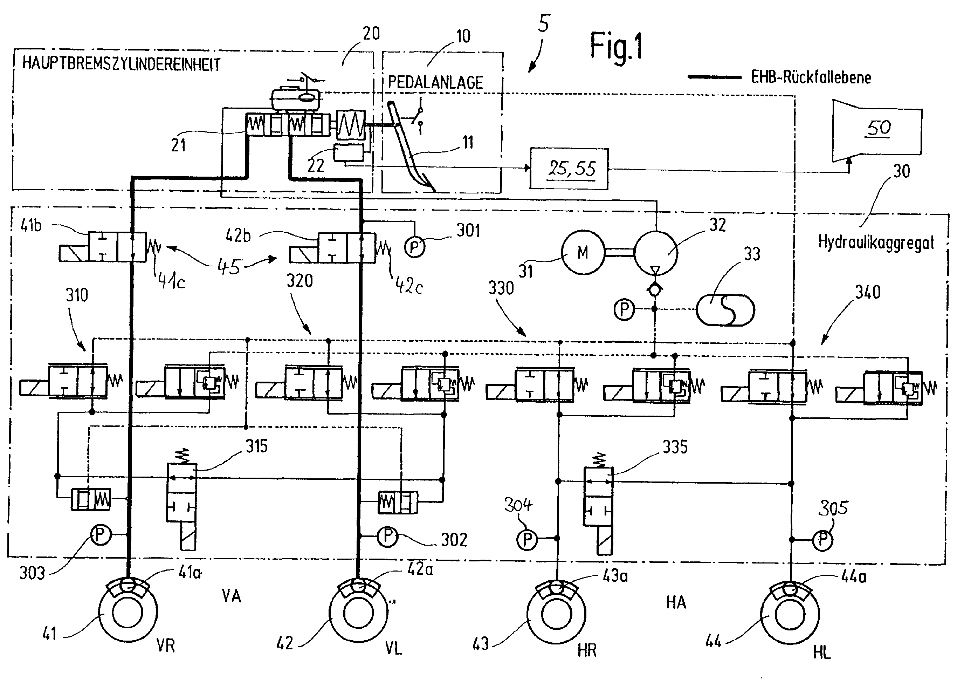

Eine in Fig. 1 dargestellte Fahrzeugbremsanlage 5 umfasst eine durch eine Pedalanlage 10 betätigbare Hauptbremszylindereinheit 20, welche ihrerseits einen Zweikreis-Hauptbremszylinder 21 umfasst. Die Stellung eines Bremspedals 11 wird durch einen Pedalwegsensor 22 erfasst, dessen Signal an eine Bremssteuereinrichtung 25 übertragen wird. Die Bremssteuereinrichtung 25 steuert ein Hydraulikaggregat 30 an, welches einen Elektromotor 31 und eine vom Elektromotor 31 antreibbare Pumpe 32 aufweist, durch die Hydraulikfluid unter Druck gesetzt werden kann. Ein Druckspeicher 33 wird mit dem unter Druck stehenden Hydraulikfluid befüllt. Die Hydraulikaggregat 30 umfasst ferner Ventileinheiten 310, 320, 330, 340, durch die an den Rädern 41, 42, 43, 44 angeordnete Radbremseinrichtungen 41a, 42a, 43a, 44a mit Druck beaufschlagbar sind bzw. durch die der Druck in den Radbremseinrichtungen 41a, 42a, 43a, 44a abbaubar ist. Die Ventileinheiten 310, 320, 330, 340 umfassen hierzu jeweils ein elektrisch ansteuerbares Ventil zum zum Abbauen des Drucks in den Radbremseinrichtungen 41a, 42a, 43a, 44a, sowie ein elektrisch ansteuerbares Proportionalventil, durch welches die Radbremseinrichtungen 41a, 42a, 43a, 44a gesteuert mit Druck beaufschlagbar sind.

Zwischen jeweils zwei jeweils einer Achse zugeordneten Ventileinheiten 310, 320 bzw. 330, 340 sind ferner zwei 2-WegeVentile 315, 335 angeordnet, durch die ein Druckausgleich zwischen den an der Vorderachse (VA), d.h. an einem rechten Vorderrad (VR) 41 und an einem linken Vorderrad (VL) 42 angeordneten Radbremszylindern 41a bzw. 42a, und den an der Hinterachse (HA), d.h. an einem rechten Hinterrad (HR) 43 und an einem linken Hinterrad (HL) 44 angeordneten Radbremseinrichtungen 43a bzw. 44a, herstellbar ist.

Des weiteren sind an den Radbremseinrichtungen 41a, 42a, 43a, 44a Drucksensoren 302, 303, 304, 305 vorgesehen, die den aktuell vorhandenen Bremsdruck in der jeweils zugeordneten Radbremseinrichtung 41a, 42a, 43a, 44a messen und den gemessenen Wert an die Bremssteuereinrichtung 25 weiterleiten, beispielsweise zur Regelung des Bremsdrucks. Ein weiterer Drucksensor 301 misst den Druck im Zweikreis-Hauptbremszylinder 21 und auch dieser Messwert wird an die Bremssteuereinrichtung übertragen.

Die Drucksensoren 301, 302, 303, 304, 305 dienen bei der Erfindung auch zur Überwachung der Hydraulik der Fahrzeugbremsanlage 5 und sind somit Bestandteil einer Überwachungseinrichtung.

Beim Vorliegen einer Betriebsstörung, z.B. bei einem Ausfall der hydraulischen Druckerzeugungseinheit der Fahrzeugbremsanlage 5 ist eine Rückfallebene vorgesehen, welche in der Fig. 1 schematisch mit fett hervorgehobenen Leitungen dargestellt ist. Wird eine Betriebsstörung der Fahrzeugbremsanlage festgestellt, so werden die eine elektrisch betätigbare Umschalteinrichtung 45 darstellenden 2/2-Wegeventile 41b, 42b mittels der Bremssteuereinrichtung 25 in die in der Fig. 1 gezeigte Position umgeschaltet, so dass eine durchgängige hydraulische Verbindung von dem Zweikreis-Hauptbremszylinder 21 zu den an der Vorderachse (VA) angeordneten Radbremseinrichtungen 41a bzw. 42a ausgebildet wird. Hierdurch ist es möglich, durch Niedertreten des Pedals 11 im Zweikreis-Hauptbremszylinder 21 einen Bremsdruck zu erzeugen und damit eine Bremskraft an den Radbremseinrichtungen 41a bzw. 42a der Vorderachse hervorzurufen. Die an der Hinterachse (HA) angeordneten Radbremseinrichtungen 43a bzw. 44a bleiben beispielsgemäß unbeaufschlagt.

Es versteht sich, dass in Abwandlung hierzu bei einer Betriebsstörung zusätzlich auch eine direkte hydraulische Verbindung vom Zweikreis-Hauptbremszylinder 21 zu den Radbremseinrichtungen 43a, 44a der Hinterachse vorgesehen sein könnte.

Die Umschalteinrichtung 45 wird zudem auch durch die Rückstellkraft von mechanischen Rückstellmitteln 41c, 42c in die in Fig. 1 dargestellte Stellung gebracht, wenn die elektrische Energieversorgung ausfällt, so dass auch dann eine direkte hydraulische Verbindung zwischen dem Zweikreis-Hauptbremszylinder 21 und den Radbremseinrichtungen 41a, 42a besteht, um das Fahrzeug noch abbremsen zu können.

Die Erkennung einer Betriebsstörung kann beispielsweise anhand der Überwachungseinrichtung erfolgen, die beispielsgemäß die Drucksensoren 301, 302, 303, 304, 305 enthält. Anhand der von den Drucksensoren gemessenen Werte kann auf die Funktionsfähigkeit der Hydraulik Fahrzeugbremsanlage zurückgeschlossen werden. Es versteht sich, dass die Überwachungseinrichtung auch weitere nicht dargestellte Sensoren aufweisen kann.

Grundidee der Erfindung ist es nun, die Bremswirkung an den angetriebenen Rädern -hier: Räder 43, 44 der Hinterachse - durch Erhöhung des an diesen Rädern wirksamen Bremsmoments zu steigern. Das Bremsmoment an den angetriebenen Rädern 43, 44 wird hervorgerufen durch das aktuell vorhandene Motorschleppmoment, das über ein Getriebe 50 (schematisch in Fig. 1 dargestellt) und weitere nicht dargestellte Komponenten des Antriebsstranges des Fahrzeugs auf bekannte Weise auf die Antriebsräder übertragen wird. Dabei wird davon ausgegangen, dass der Fahrer bei der Anforderung eines Bremsvorganges nicht gleichzeitig das Gaspedal betätigt, was zu einem auf die Antriebsräder übertragenen Antriebsmoment und nicht zu einem Bremsmoment führen würde. Bei einer elektrisch betätigten Gaspedal ("E-Gas") kann dieser Fall auch auf einfache Weise ausgeschlossen werden, z.B. Anforderung des Gaspedals wird bewusst unterdrückt.

Die Erhöhung des Bremsmoments an den angetriebenen Rädern 43, 44 wird durch die Erhöhung der Getriebeübersezung erreicht. Dies geschieht mittels der Beeinflussung des Getriebes 50 des Fahrzeugs - beispielsweise eines automatischen Lastschaltgetriebes, eines insbesondere voll- oder teilautomatisierten Handschaltgetriebes oder eines stufenlosen automatischen Getriebes - dadurch, dass das Getriebe 50 mittels einer Getriebesteuereinheit 55 in eine niedrigere Fahrstufe bzw. in einen niedrigeren Gang geschaltet wird bzw. die Übersetzung bei einem stufenlosen automatischen Getriebe 50 erhöht wird, so dass hierdurch ein höheres Bremsmoment durch bessere Ausnutzung des Motorschleppmoments erzeugt wird. Ein voll- oder teilautomatisiertes Handschaltgetriebe kann dabei beispielsweise mittels Aktoren durch die Getriebesteuereinheit 55 betätigt werden.

Zur Beeinflussung der Getriebeübersetzung mittels der Getriebesteuereinheit 55 ist es notwendig, dass die Betriebsstörung nicht die elektrische Energieversorgung betrifft. Bei Wegfall der elektrischen Energieversorgung ist die Getriebesteuereinheit 55 nicht mehr funktionsfähig, so dass lediglich wie seither üblich, mittels der Rückfallebene der Fahrzeugbremsanlage 5 abgebremst werden kann.

Nachfolgend wird ein Ausführungsbeispiel eines Verfahrens zum Abbremsen eines Fahrzeugs mit einer Fahrzeugbremsanlage gemäß Fig. 1 erläutert.

Mittels der in Fig. 1 fett dargestellten hydraulischen Rückfallebene kann nur die Vorderachse gebremst werden. Das Fahrzeug kann dabei mit maximal ca. 3 m/sec.$^2$ verzögert werden.

Es wird nun von folgenden Annahmen ausgegangen:

- Es liegt eine Gesamtübersetzung der angetriebenen Achse und des Getriebes in Gangstufe 1 von $i_{ges} = 10$ vor.

- Das nutzbare Motorschleppmoment $M_{Schlepp}$ beträgt 50 Nm.

- Der dynamische Radhalbmesser beträgt $R_{dyn} = 0,3$ m.

- Die Fahrzeugmasse $m_{Fzg}$ beträgt 1600 kg und es liegt

- ein ausreichender Fahrbahnreibwert vor.

Damit ergibt sich als zusätzliche Bremskraft über das Motorschleppmoment

$$\Delta F = M_{Schlepp} * i_{ges}/r_{dyn} = 50 * 10/0,3 \ N \approx 1600 \ N.$$

Hieraus ergibt sich eine zusätzliche Verzögerung durch $\Delta F$:

$$\Delta a = \Delta F/m_{Fzg} = 1600/1600 * m/s^2 = 1 * m/s^2.$$

Die maximal erreichbare Fahrzeugverzögerung kann auf diese Weise um ca. 30 % erhöht werden kann.

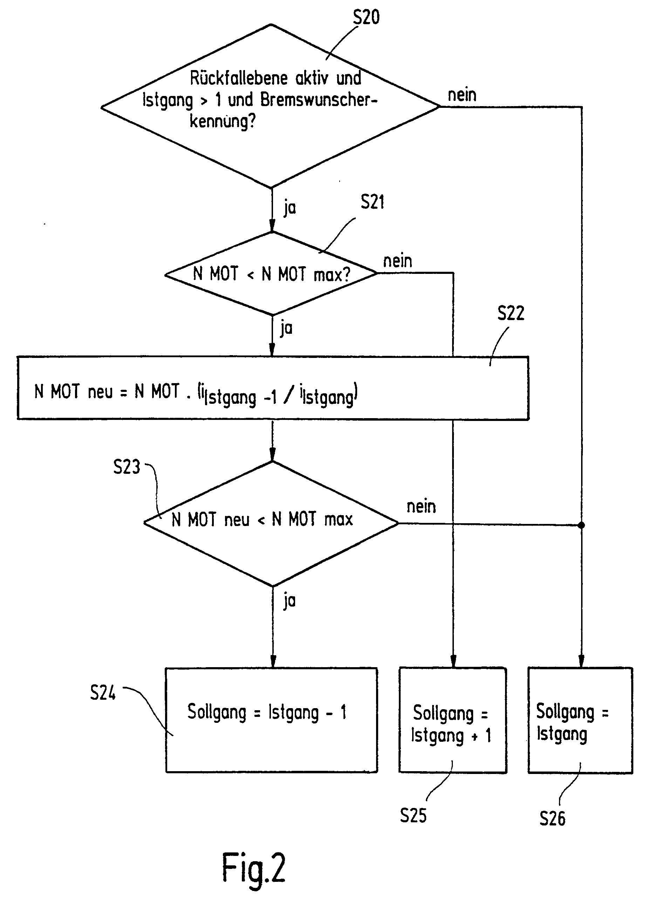

Die Verfahrensschritte zur Erhöhung des Bremsmoments an den Rädern 43, 44 der Hinterachse sind schematisch in Fig. 2 dargestellt.

Sofern ein Bremswunsch des Fahrers des Fahrzeugs erkannt wird, wird zunächst in einem Schritt S20 überprüft, ob die Rückfallebene aktiv ist und ob der eingelegte Istgang größer als 1 ist, das heißt ein höherer als der erste Gang eingelegt ist. Die Rückfallebene ist dann aktiv, wenn eine Betriebsstörung der Fahrzeugbremsanlage 5 wie zuvor beschrieben vorliegt und die Umschalteinrichtung 45 den Zweikreis-Hauptbremszylinder 21 mit den Radbremseinrichtungen 41a, 42a verbindet. Die Erkennung der Aktivierung der Rückfallebene kann daher anhand der Stellung der Umschalteinrichtung 45 erfolgen.

Ist bei Vorliegen eines Fahrerbremswunsches die Rückfallebene nicht aktiv oder ist der erste Gang eingelegt (höchstmögliche Übersetzung), wird der Istgang als Sollgang beibehalten (Schritt S26). Das gleiche gilt auch dann, wenn kein Fahrerbremswunsch im Schritt S20 festgestellt wurde.

Andernfalls wird in Schritt S21 überprüft, ob die erfasste Istmotordrehzahl NMOT kleiner als eine gespeicherte maximale Motordrehzahl NMOTmax ist. Trifft dies nicht zu, ist also die erfasste Istmotordrehzahl NMOT größer oder gleich der maximalen Motordrehzahl NMOTmax, wird in Schritt S25 ein Sollgang festgelegt, der dem um eine Stufe erhöhten Istgang entspricht, das heißt es wird um einen Gang hochgeschaltet, so dass wegen des dadurch erreichten kleineren Übersetzungsmoments die Drehzahl sinkt. Hierdurch wird der Antriebsmotor vor einer Überlast geschützt. Ist die erfaßte Istmotordrehzahl NMOT dagegen kleiner als die maximale Motordrehzahl NMOTmax, wird in Schritt S22 eine neue Motordrehzahl NMOTneu berechnet, die der Motordrehzahl entspricht, die entsteht, wenn das Schaltgetriebe um eine Gangstufe heruntergeschaltet wird. In Schritt S23 wird sodann überprüft, ob diese berechnete neue Motordrehzahl NMOTneu kleiner ist als die maximal mögliche Motordrehzahl NMOTmax. Ist dies nicht der Fall, wird der momentan eingelegte Istgang als Sollgang beibehalten (Schritt S26). Trifft dies dagegen zu, wird in Schritt S24 der Istgang um eine Gangstufe vermindert, das heißt es wird um einen Gang zurückgeschaltet. Diese zurückgeschaltete Gangstufe entspricht dann dem Sollgang.

Durch das beschriebene Verfahren kann auf einfache Weise bei einem Bremsvorgang das an den angetriebenen Rädern 43, 44 vorhandene, durch das Motorschleppmoment hervorgerufene Bremsmoment durch Einlegen einer niedrigeren Gangstufe bzw. durch Erhöhen der Getriebeübersetzung erhöht werden. Es versteht sich, dass wenn das Fahrzeug zum Stillstand gekommen ist oder sich nur noch mit einer kleinen Geschwindigkeit unterhalb einer vorgebbaren Grenzgeschwindigkeit bewegt, in den Leerlauf umgeschaltet oder das Getriebe abgekoppelt werden kann, um ein "Abwürgen" des Motors zu vermeiden.

Ein Bremsvorgang des Fahrzeugs ist auf einfache Weise durch Veränderung der Stellung des Bremspedals 11, oder durch den Pedalsensor 22, oder durch Bremsdrucksensoren 301, 302, 303 oder durch Erfassung und Auswertung der Fahrzeugverzögerung erfassbar. In einer Notsituation beispielsweise bei Ausfall des Hydraulikaggregats 30, wird zusätzlich zu den durch die Rückfallebene abgebremsten Vorderrädern 41, 42, eine Bremswirkung an den Hinterrädern 43, 44 durch das beschriebene gesteuerte Herunterschalten des Getriebes 50 bzw. die Erhöhung der Getriebeübersetzung eine vorteilhafte Ausnutzung des Motorschleppmoments ermöglicht.

## Patentansprüche

1. Verfahren zum Abbremsen eines Fahrzeugs mittels eines Fahrzeugbremsanlage (5) mit einer elektrisch und/oder elektronisch ansteuerbaren Bremssteuereinrichtung (25) und mit einem Antriebsmotor, dessen Motormoment über ein Getriebe (50) auf Antriebsräder (43, 44) des Fahrzeugs übertragen wird, wobei beim Vorliegen einer Betriebsstörung des Fahrzeugbremssystems (5) und bei einer vorliegenden Anforderung eines Bremsvorgangs sowohl eine durchgängige hydraulische Verbindung zumindest zwischen dem Zweikreis-Hauptbremszylinder (21) und den Radbremseinrichtungen (41a, 42a) der Vorderachse hergestellt, als auch automatisch die Getriebeübersetzung von einer das Getriebe (50) ansteuernden Getriebesteuereinrichtung (55) zur Erzeugung eines an den Antriebsrädern (43, 44) wirksamen, erhöhten Bremsmomentes erhöht wird.

2. Verfahren nach Anspruch 1, **dadurch gekennzeichnet, dass** es sich bei der zu erkennenden Betriebsstörung um eine Störung des hydraulischen Teils der Fahrzeugbremsanlage (5) handelt.

3. Verfahren nach Anspruch 2, **dadurch gekennzeichnet, dass** zur Erkennung der Betriebsstörung zumindest die für den Betrieb der Fahrzeugbremsanlage (5) notwendigen hydraulischen Komponenten überwacht werden.

4. Verfahren nach einem der Ansprüche 1 bis 3, **dadurch gekennzeichnet, dass** die Übersetzung eines automatischen Lastschaltgetriebes durch Herunterschalten in eine niedrigere Fahrstufe erhöht wird.

5. Verfahren nach einem der Ansprüche 1 bis 3, **dadurch gekennzeichnet, dass** die Übersetzung eines insbesondere teil- oder vollautomatisierten Handschaltgetriebes durch Herunterschalten in einen niedrigeren Gang mittels Aktoren erhöht wird.

6. Verfahren nach einem der Ansprüche 1 bis 3, **dadurch gekennzeichnet, dass** die Übersetzung eines stufenlosen automatischen Getriebes kontinuierlich erhöht wird.

7. Verfahren nach einem der Ansprüche 1 bis 6, **dadurch gekennzeichnet, dass** ein Bremswunsch auf eine oder mehrere der folgenden Weisen erkannt wird: Erfassung der Stellung eines Bremspedals (11), durch einen Pedalsensor (22), durch wenigstens einen Bremsdrucksensor (301, 302, 303) und/oder durch Erfassung und Auswertung der Fahrzeugverzögerung.

8. Verfahren nach einem der Ansprüche 1 bis 7, **dadurch gekennzeichnet, dass** die Getriebeübersetzung nur dann erhöht wird, wenn die sich durch diese Erhöhung der Getriebeübersetzung einstellende Motordrehzahl (NMOTneu) des Antriebsmotors unterhalb eines vorgebbaren Grenzwerts (NMOTmax) liegt.

9. Verfahren nach einem der Ansprüche 1 bis 8, **dadurch gekennzeichnet, dass** die Getriebeübersetzung verringert wird, wenn die aktuelle Motordrehzahl (NMOT) des Antriebsmotors einen vorgebbaren Grenzwert (NMOTmax) erreicht hat.

10. Vorrichtung zur Durchführung eines Verfahrens nach einem der Ansprüche 1 bis 9, mit einer elektrisch und/oder elektronisch ansteuerbaren Bremssteuereinrichtung (25) und mit einem Antriebsmotor, dessen Motormoment über ein Getriebe (50) auf Antriebsräder (43, 44) des Fahrzeugs übertragen wird, wobei beim Vorliegen einer Betriebsstörung des Fahrzeugbremssystems (5) und bei einer vorliegenden Anforderung eines Bremsvorgangs sowohl eine durchgängige hydraulische Verbindung zumindest zwischen dem Zweikreis-Hauptbremszylinder (21) und den Radbremseinrichtungen (41a, 42a) der Vorderachse mittels einer Umschalteinrichtung (45) hergestellt, als auch automatisch die Getriebeübersetzung von einer das Getriebe (50) ansteuernden Getriebesteuereinrichtung (55) zur Erzeugung eines an den Antriebsrädern (43, 44) wirksamen, erhöhten Bremsmomentes erhöht wird.

11. Vorrichtung nach Anspruch 10, **dadurch gekennzeichnet, dass** es sich bei der Fahrzeugbremsanlage (5) um eine elektrohydraulische Bremsanlage handelt.

12. Vorrichtung nach Anspruch 10 oder 11, **dadurch gekennzeichnet, dass** die Bremssteuereinrichtung (25) und die Getriebesteuereinheit (55) in einer gemeinsamen Steuereinrichtung integriert sind.

13. Vorrichtung nach einem der Ansprüche 10 bis 12, **dadurch gekennzeichnet, dass** zur Überwachung der Funktion der Fahrzeugbremsanlage (5) eine Überwachungseinrichtung vorgesehen ist, die Überwachungssignale an die Bremssteuereinrichtung (25) überträgt.

14. Vorrichtung nach Anspruch 13, **dadurch gekennzeichnet, dass** die Überwachungseinrichtung wenigstens einen Drucksensor (301, 302, 303, 304, 305) zur Messung des hydraulischen Drucks aufweist.

**Claims**

1. Method for decelerating a vehicle by means of a vehicle brake system (5) with an electrically and / or electronically controllable brake control device (25) and with a drive motor whose motor moment is transferred through a gearbox (50) to drive wheels (43, 44) of the vehicle wherein if there is an operating fault of the vehicle brake system (5) and if there is a requirement for a braking process, both a continuous hydraulic connection at least between the dual circuit brake master cylinder (21) and the wheel brake devices (41a, 42a) of the front axle is produced and also the gear ratio is automatically increased by a gearbox control device (55) controlling the gearbox (50) for the purpose of producing an increased brake moment acting on the drive wheels (43, 44).

2. Method according to claim 1, **characterised in that** the operating fault to be recognised is a fault of the hydraulic part of the vehicle brake system (5).

3. Method according to claim 2, **characterised in that** for the purpose of recognising the operating fault at least the hydraulic components necessary for the operation of the vehicle brake system (5) are monitored.

4. Method according to one of the claims 1 to 3, **characterised in that** the gear ratio of an automatic power shift transmission is increased through downshifting into a lower gear

5. Method according to one of the claims 1 to 3, **characterised in that** the gear ratio in particular of a partly or fully automated hand-shift gearbox is increased through downshifting into a lower gear by means of actuators.

6. Method according to one of the claims 1 to 3, **characterised in that** the gear ratio of a stepless automatic transmission is continuously increased.

7. Method according to one of the claims 1 to 6, **characterised in that** a desire to brake is recognised in one or more of the following ways: detection of the position of a brake pedal (11), through a pedal sensor (22), through at least one brake pressure sensor (301, 302, 303) and / or through detecting and evaluating the vehicle deceleration.

8. Method according to one of the claims 1 to 7, **characterised in that** the gear ratio is only increased if the motor speed (NMOTneu) of the drive motor being adjusted through this increase in the gear ratio lies below a pre-specifiable threshold (NMOTmax).

9. Method according to one of the claims 1 to 8, **characterised in that** the gear ratio is reduced if the current motor speed (NMOT) of the drive motor has reached a pre-specifiable threshold (NMOTmax).

10. Device for implementing a method according to one of the claims 1 to 9, comprising an electrically and / or electronically controllable brake control device (25) and a drive motor whose motor torque is transferred through a gearbox (50) to drive wheels (43, 44) of the vehicle wherein if there is an operating fault of the vehicle brake system (5) and if there is a requirement for a braking process, both a continuous hydraulic connection at least between the dual circuit brake master cylinder (21) and the wheel brake devices (41a, 42a) of the front axle is produced by means of a change-over device (45) and also the gear ratio is automatically increased by a gearbox control device (55) controlling the gearbox (50) for the production of an increased brake moment acting on the drive wheels (43, 44).

11. Device according to claim 10, **characterised in that** the vehicle brake system (5) is an electro-hydraulic brake system.

12. Device according to claim 10 or 11, **characterised in that** the brake control device (25) and the gearbox control unit (55) are integrated in a shared control device.

13. Device according to one of the claims 10 to 12, **characterised in that** for the purpose of monitoring the function of the vehicle brake system (5) a monitoring device is provided which transmits monitoring signals to the brake control device (25).

14. Device according to claim 13, **characterised in that** the monitoring device comprises at least one pressure sensor (301, 302, 303, 304, 305) for measuring the hydraulic pressure.

**Revendications**

1. Procédé pour freiner un véhicule au moyen d'un système de freinage de véhicule (5) comprenant un dispositif de commande de freinage (25) pouvant être piloté électriquement et/ou électroniquement et un moteur d'entraînement dont le couple de moteur est transmis à des roues d'entraînement (43, 44) du véhicule via une transmission (50), dans lequel, en présence d'un défaut de service du système de freinage de véhicule (5) et d'une demande d'une opération de freinage, aussi bien une liaison hydraulique continue est établie au moins entre le cylindre de freinage principal à deux circuits (21) et les dispositifs de freinage des roues (41a, 42a) de l'essieu avant, que la multiplication/démultiplication de transmission est augmentée automatiquement par un dispositif de commande de transmission (55) qui commande la transmission (50) pour générer un couple de freinage qui agit sur les roues d'entraînement (43, 44) et qui est augmenté.

2. Procédé selon la revendication 1, **caractérisé en ce que** le défaut de service devant être reconnu est un défaut de la partie hydraulique du système de freinage de véhicule (5).

3. Procédé selon la revendication 2, **caractérisé en ce que**, pour reconnaître le défaut de service, au moins les composants hydrauliques nécessaires au fonctionnement du système de freinage de véhicule (5) sont surveillés.

4. Procédé selon l'une des revendications 1 à 3, **caractérisé en ce que** la multiplication/démultiplication d'une transmission de boîte à vitesses automatique est augmentée par la commutation jusque dans un échelon de roulement plus bas.

5. Procédé selon l'une des revendications 1 à 3, **caractérisé en ce que** la multiplication/démultiplication d'une boîte à vitesses manuelle, en particulier automatisée partiellement ou entièrement, est augmentée par la commutation jusque dans une vitesse plus basse au moyen d'actionneurs.

6. Procédé selon l'une des revendications 1 à 3, **caractérisé en ce que** la multiplication/démultiplication d'une transmission automatique progressive est augmentée continuellement.

7. Procédé selon l'une des revendications 1 à 6, **caractérisé en ce qu'**un souhait de freinage est reconnu par une ou plusieurs des manières suivantes : saisie de la position d'une pédale de freinage (11), par un capteur de pédale (22), par au moins un capteur de pression de freinage (301, 302, 303), et/ou saisie et évaluation du retard du véhicule.

8. Procédé selon l'une des revendications 1 à 7, **caractérisé en ce que** la multiplication/démultiplication de transmission est augmentée seulement si la vitesse de rotation du moteur d'entraînement (NMOTneu), laquelle s'ajuste en raison de cette augmentation de la multiplication/démultiplication de transmission, est inférieure à une valeur limite pouvant être prescrite (NMOTmax).

9. Procédé selon l'une des revendications 1 à 8, **caractérisé en ce que** la multiplication/démultiplication de transmission est diminuée si la vitesse de rotation actuelle du moteur d'entraînement (NMOT) a atteint une valeur limite pouvant être prescrite (NMOTmax).

10. Dispositif pour exécuter un procédé selon l'une des revendications 1 à 9, comprenant un dispositif de commande de freinage (25) pouvant être piloté électriquement et/ou électroniquement et un moteur d'entraînement dont le couple de moteur est transmis à des roues d'entraînement (43, 44) du véhicule via une transmission (50), dans lequel, en présence d'un défaut de service du système de freinage de véhicule (5) et d'une demande d'une opération de freinage, aussi bien une liaison hydraulique continue est établie au moins entre le cylindre de freinage principal à deux circuits (21) et les dispositifs de freinage des roues (41a, 42a) de l'essieu avant au moyen d'un dispositif de commutation (45), que la multiplication/démultiplication de transmission est augmentée automatiquement par un dispositif de commande de transmission (55) qui commande la transmission (50) pour générer un couple de freinage qui agit sur les roues d'entraînement (43, 44) et qui est augmenté.

11. Dispositif selon la revendication 10, **caractérisé en ce que** le système de freinage de véhicule (5) est un système de freinage électro-hydraulique.

12. Dispositif selon la revendication 10 ou 11, **caractérisé en ce que** le dispositif de commande de freinage (25) et l'unité de commande de transmission (55) sont intégrés dans un dispositif de commande commun.

13. Dispositif selon l'une des revendications 10 à 12, **caractérisé en ce que**, pour surveiller la fonction du système de freinage de véhicule (5), on a prévu un dispositif de surveillance qui transmet des signaux de surveillance au dispositif de commande de freinage (25).

14. Dispositif selon la revendication 13, **caractérisé en ce que** le dispositif de surveillance présente au moins un capteur de pression (301, 302, 303, 304, 305) pour mesurer la pression hydraulique.

Fig.1

HAUPTBREMSZYLINDEREINHEIT

PEDALANLAGE

5

—— EHB-Rückfallebene

20

10

21

22

11

25,55

50

30

Hydraulikaggregat

41b

42b

301

32

33

45

310

320

330

340

31  M

41c

42c

315

335

303

302

304

305

41a

42a

43a

44a

41  VR

42  VL

43  HR

44  HL

VA

HA

S20

Rückfallebene aktiv und
Istgang > 1 und Bremswunscherkennüng?

nein

ja S21

N MOT < N MOT max?

nein

ja

S22

N MOT neu = N MOT . $(i_{Istgang-1} / i_{Istgang})$

S23

N MOT neu < N MOT max

nein

ja

S24

Sollgang = Istgang - 1

Sollgang =
Istgang + 1

Sollgang =
Istgang

S25

S26

# Fig.2